(19) **Europäisches Patentamt / European Patent Office / Office européen des brevets**

(11) **EP 2 326 540 B1**

(12) **EUROPEAN PATENT SPECIFICATION**

(45) Date of publication and mention
of the grant of the patent:
**28.12.2016 Bulletin 2016/52**

(51) Int Cl.:
***B60T 7/20*** (2006.01)  ***B60T 8/17*** (2006.01)
***B60T 8/88*** (2006.01)  ***B60T 17/22*** (2006.01)

(21) Application number: **09784914.5**

(22) Date of filing: **11.08.2009**

(86) International application number:
**PCT/GB2009/001971**

(87) International publication number:
**WO 2010/023426 (04.03.2010 Gazette 2010/09)**

(54) **METHOD OF AND APPARATUS FOR MONITORING THE PERFORMANCE OF A VEHICLE BRAKING SYSTEM**

VERFAHREN UND VORRICHTUNG ZUR ÜBERWACHUNG DER LEISTUNG EINES FAHRZEUGBREMSSYSTEMS

PROCÉDÉ ET DISPOSITIF DE SURVEILLANCE DE LA PERFORMANCE D'UN SYSTÈME DE FREINAGE DE VÉHICULE

(84) Designated Contracting States:
**AT BE BG CH CY CZ DE DK EE ES FI FR GR HR HU IE IS IT LI LT LU LV MC MK MT NL NO PL PT RO SE SI SK SM TR**

(30) Priority: **23.08.2008 GB 0815453**

(43) Date of publication of application:
**01.06.2011 Bulletin 2011/22**

(73) Proprietors:
• **Haldex Brake Products Limited
Lindley, Warwickshire CV13 6DE (GB)**
• **BPW Bergische Achsen Kommanditgesellschaft
51674 Wiehl (DE)**

(72) Inventors:
• **MANZ, Stefan
51674 Wiehl (DE)**

• **MOOG, Reiner
51588 Nümbrecht (DE)**
• **HARRISON, Dudley
Birmingham B27 7AB (GB)**
• **MUNSLOW, Wayne
Redditch, Worcestershire B98 9HA (GB)**

(74) Representative: **Lawson, Alison Christina et al
Forresters
Skygarden
Erika-Mann-Strasse 11
80636 München (DE)**

(56) References cited:
**EP-A1- 0 531 077    EP-A1- 0 653 340
EP-A2- 0 509 225    US-A- 5 892 437**

**Description**

Description of Invention

The present invention relates to a method of and apparatus for monitoring the performance of a vehicle braking system, particularly for use in connection with a vehicle comprising a tractor and a trailer.

In articulated vehicles comprising a tractor and a trailer (which could be a full trailer or a semi-trailer), when the driver requires the brakes to be applied to the vehicle and actuates the brake pedal, a braking control pressure signal is transmitted to the braking system of the tractor and the trailer. The braking control pressure signal is converted to a brake operating signal which is transmitted to actuators to operate brakes associated with the wheels of the vehicle in order that the vehicle achieves the level of deceleration required by the driver.

It is desirable that the resulting braking forces are well-matched over the entire vehicle, so that if the same braking force were applied to either the tractor or trailer in isolation, the deceleration would be the same as it is when the braking force is applied to the tractor and trailer combination. Mismatching of the braking forces will put additional strain on the coupling between the tractor and trailer, and can cause some of the brakes of the combination to run too hot, which can result in excessive wear of and perhaps even irreversible damage to the brake linings, rotors etc, whilst the other brakes of the combination run below their optimum running temperature.

Mismatching of the braking of the tractor and trailer can be caused by a variety of factors:

1. An error in the calculation of the braking operation signal, due to inaccuracies in the information given about the equipment fitted to the vehicle or incorrect adjustment of the equipment for measuring the vehicle load,

2. The replacement of braking components on the vehicle during servicing with components of different specification,

3. Setting of "trailer predominance" on the tractor so that the trailer develops braking at a lower driver demand than the tractor, or

4. Non-typical usage of the vehicle brakes, such as mostly very light brake applications or a significant number of long, heavy applications.

Compatibility control systems whereby the braking of the vehicle is monitored and the braking control pressure adjusted to improve the matching between the tractor and trailer braking are known. It is, for example, known to provide a sensor for measuring the stress the coupling between the tractor and trailer is under, and to adjust the trailer and/or tractor braking control pressure so as to minimise the coupling stress. Such a system is disclosed in DE3901270A, for example.

It is also known to use indirect means of monitoring the matching of the braking, for example by comparing the desired deceleration according to driver demand, with the actual vehicle deceleration derived from wheel speed signals. Such a compatibility control system is, for example, disclosed in EP0697314A

These systems do not provide perfect results, however, and if the mismatching is significant, the system may not have the capacity to adjust the braking control pressure sufficiently to eliminate the mismatching. These systems are also not particularly effective at low deceleration levels when they can cause under-braking or over-braking of the trailer.

It is therefore known to monitor the braking performance of the vehicle, and to provide an output which is indicative of the quality of the matching between the braking of the trailer and that of the tractor. Such a system is disclosed in EP1800982 for example, and in this case, the braking control pressure and vehicle deceleration are measured at various points during a braking event, the braking control pressures and decelerations are each classified into a set of ranges, and the number of values falling into a given range are counted. In this way, a histogram is generated for each of these parameters. A value representative of the quality of the matching of the tractor and trailer braking is calculated by dividing the average of the braking pressures with the average of the decelerations.

US 5,892,437 discloses a brake warning system for vehicles with pneumatic air brakes which monitors various factors, including vehicle deceleration and braking control pressure during a braking manoeuvre, to provide an indication of a pending or actual brake failure condition. Data collected during a braking manoeuvre is compared with calculated values for cool, properly maintained brakes.

According to a first aspect of the invention we provide a method of providing an indication of the performance of the braking system of a vehicle comprising a tractor and a trailer in which, during a braking event, a braking control pressure signal is generated in response to driver demand for braking, the braking control pressure signal indicating a braking control pressure which is representative of the degree of braking required by the driver, and is transmitted to braking systems provided on the tractor and trailer, the method including the steps of determining an average value of the braking control pressure during the braking event, determining an average value of the vehicle deceleration during the braking event, and using both the average braking control pressure and average vehicle deceleration to assign the braking event to one of a plurality of categories.

Preferably, the method is repeated for a plurality of braking events, and a count of the number of braking events falling into each of the plurality of categories maintained and stored in a histogram.

Preferably each of the plurality of categories represents a discrete area on a plot of vehicle deceleration versus braking control pressure.

Each of the categories may be assigned a brake performance number, which is used in conjunction with the data stored in the histogram to calculate a value indicative of the performance of the vehicle braking systems.

Each braking event may be assessed to determine if it meets certain pre-determined qualifying criteria, and the information obtained about the braking event discarded if the braking event does not meet the pre-determined qualifying criteria.

The braking control pressures may be classified into a plurality of ranges, and each braking event classified according to which of the ranges the average braking control pressure for that event falls, a separate histogram showing the number of braking events falling in each of the plurality of categories being created for each of the plurality of braking control pressure ranges.

The braking systems may be provided with a means of measuring the load carried by the vehicle, in which case, the vehicle loads may be classified into a plurality of ranges, and each braking event classified according to which of the ranges the vehicle load lies during the braking event, a separate histogram showing the number of braking events falling in each of the plurality of categories being created for each of the plurality of vehicle load ranges.

According to a second aspect of the invention we provide an electronic braking control apparatus for use in the braking system of a vehicle comprising a tractor and a trailer, the electronic braking apparatus being programmed to carry out the method according to the first aspect of the invention.

An embodiment of the invention will now be described, by way of example only, with reference to the following drawings, of which:

FIGURE 1 shows a schematic illustration of a vehicle fitted with a braking system and an apparatus for monitoring the performance of the braking system according to the second aspect of the invention;

FIGURE 2 shows a plot of deceleration Z against braking control pressure $P_m$ for the tractor of the vehicle illustrated in Figure 1, when unladen (i.e. without the trailer) and when laden (i.e. when pulling the trailer);

FIGURE 3 shows a plot of deceleration Z against braking control pressure $p_m$ for the trailer of the vehicle illustrated in Figure 1;

FIGURE 4 shows the plot of deceleration Z against braking control pressure $p_m$ for various braking events in a well-matched tractor and trailer combination,

FIGURE 5a shows a plot of deceleration Z against braking control pressure $p_m$ for various braking events in a tractor and trailer combination in which the trailer is over-braked.

FIGURE 5b shows a plot of deceleration Z against braking control pressure $p_m$ for various braking events in a tractor and trailer combination in which the trailer is under-braked.

FIGURE 6 shows a histogram showing the brake performance band distribution of the braking events shown in Figure 4,

FIGURE 7 shows a histogram showing the brake performance band distribution of the braking events shown in Figure 5a,

FIGURE 8 shows a histogram showing the brake performance band distribution of the low pressure (1-2 bar) braking events shown in Figure 4

FIGURE 9 shows a histogram showing the brake performance band distribution of the high pressure (2-4.5 bar) braking events shown in Figure 4,

FIGURE 10 shows a histogram showing the brake performance band distribution of the low pressure (1-2 bar) braking events shown in Figure 5a, and

FIGURE 11 shows a histogram showing the brake performance band distribution of the high pressure (2-4.5 bar) braking events shown in Figure 5a.

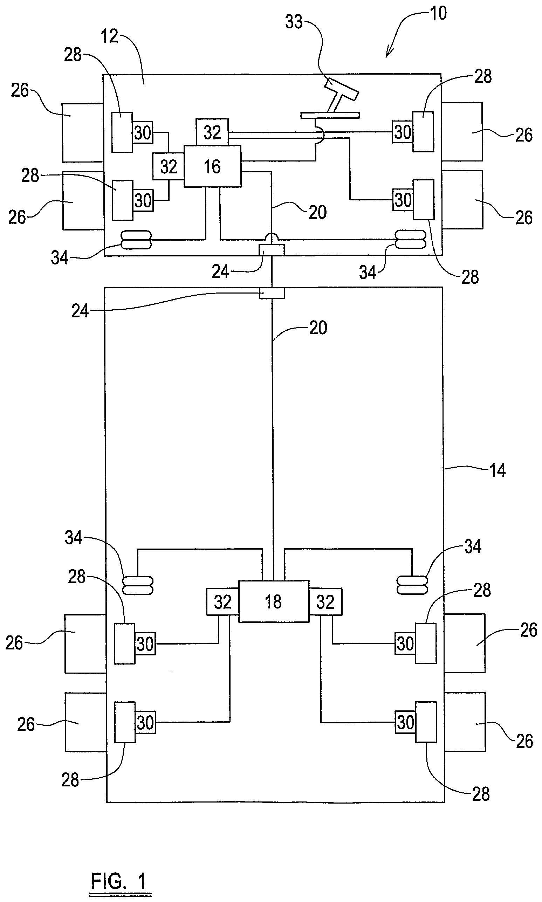

Referring now to Figure 1, there is shown a vehicle 10 comprising a tractor 12 and a trailer 14. The trailer may be a full trailer, but in this example is a semi-trailer. Both the tractor 12 and trailer 14 are provided with an electronic braking system (EBS). The tractor 12 has a main braking electronic control unit (ECU) 16 and the trailer 14 has a main braking electronic control unit (ECU) 18. The two ECUs are connected together by means of a CAN bus 20 and a tractor connector 22 mounted on the rear of the tractor 12 and a trailer connector 24 mounted on the front of the trailer 14.

The tractor 12 and trailer 14 are each provided with a plurality of axles on which are mounted wheels 26. Each wheel 26 is provided with a brake 28 which is operated by an actuator 30. In this example, the actuators 30 are pneumatically operable, and are therefore connected to a source of pressurised fluid (in this example compressed air) via a modulator 32. Each modulator 32 is electrically operable and receives an electrical signal input from one of the ECUs 16, 18 so that it may control the flow of compressed air to one or more of the brake actuators 30. In this example, each modulator 32 is controls flow of compressed air to the actuators 30 associated with the wheels 26 at one side of the tractor or trailer respectively in response to an electrical braking signal from the respective ECU 16, 18.

A brake pedal 33 is provided in a driver's cab of the vehicle, and is operable by the driver to generate a braking control pressure signal, which, in this case, is an electrical signal representative of the desired braking control pressure $P_m$. An electrical connection is provided from the brake pedal 33 to the tractor ECU 16 by means of which the braking control pressure signal can be transmitted to the tractor ECU 16.

The trailer 14 also includes means to provide a signal indicative of the loading of the trailer. In this example, the tractor 12 and trailer 14 are provided with an air suspension system in which the chassis of each of the tractor 12 and trailer 14 is supported on the axles by means of air springs 34. It will be appreciated that the pressure of the air within the springs 34 on the trailer will increase with increasing loading of the trailer, and a pressure sensor is provided to measure the pressure in at least one of the air springs 34 provided on the trailer. In this example, a pneumatic line extends from the trailer ECU 18 to each of the trailer air springs, and the trailer ECU 18 is provided with a pressure transducer which converts the pressure in this pneumatic line to an electrical input signal which is representative of the loading of the trailer 14.

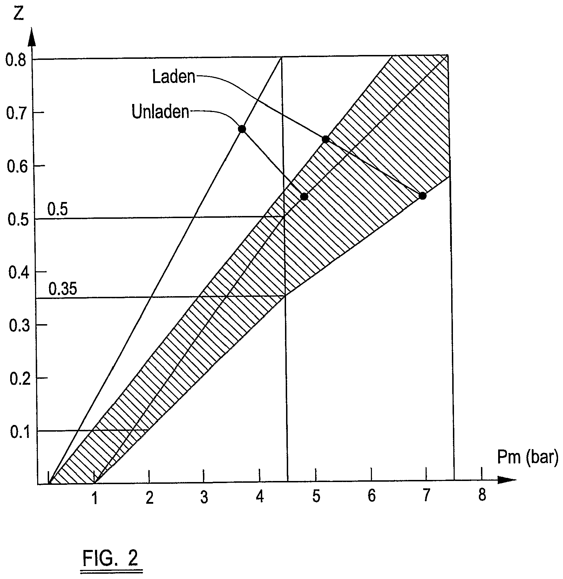

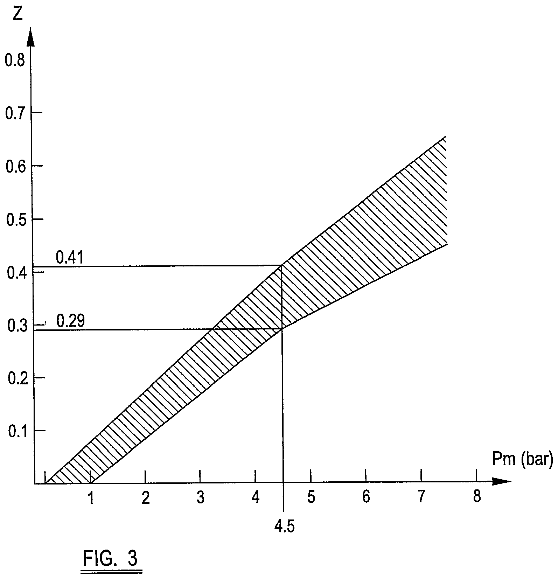

The deceleration Z of the vehicle as a whole (or the components of the vehicle), can be defined as the ratio of the sum of the total braking forces T on the vehicle (or the component in question) to the total static reaction force P of the road on all the wheels of the vehicle (or component in question). In territories in which UNECE Regulation 13 is applicable, the relationship between the braking control pressure $p_m$ and the deceleration (Z = T/P) for the tractor 12 and trailer 14 is specified as a "brake performance band" in a plot of Z versus braking control pressure $p_m$, as illustrated in Figures 2 and 3.

Figure 2 shows two bands for the tractor 12 - one for the tractor 12 on its own, and one for the tractor when pulling the trailer 14. The braking system of the tractor 12 and trailer 16 must, in other words, be configured so that when driver braking demand produces a particular brake pressure control signal the deceleration of the tractor 12 or trailer 14 must lie within the brake performance band. For example, as illustrated in Figure 2, for an unladen tractor, where the braking control pressure is 4.5 bar, the braking system must be configured so that the resulting Z lies between 0.5 and 0.8, whereas for a laden tractor 12, the resulting Z must lie between 0.35 and 0.55. Similarly, for the trailer 14, where the braking control pressure is 4.5 bar, the braking system must be configured so that the resulting Z lies between 0.29 and 0.41.

Both the tractor ECU 16 and the trailer ECU 18 have a non-volatile memory in which is stored information concerning the relationship between the braking control pressure $p_m$ and the brake operating signal required to produce a deceleration within the braking performance band at different vehicle loading levels, using the particular braking equipment fitted to the vehicle.

Each wheel 26 is provided with a wheel speed sensor which is connected to the respective ECU 16, 18, the ECU 16, 18 having an input for a wheel speed signal from each wheel speed sensor. The ECUs 16, 18 are programmed using conventional antilock braking system (ABS) algorithms to monitor the speed of the wheels 26, to detect if there is wheel-lock during braking, and to modify the operation of one or more of the brake actuators 30 accordingly.

The vehicle may be fitted with one of the prior art compatibility control systems discussed above.

The braking system is operable as follows. A driver of the vehicle 10 generates an electrical braking control pressure signal, for example by operating a brake pedal 33, and this braking control pressure signal is transmitted to the tractor ECU 16. The tractor ECU 16 converts the braking control pressure signal to a brake operating signal from the information stored in its memory about the tractor braking system discussed above and then transmits the brake operating signal to each of the modulators 32 mounted on the tractor 12 to ensure that the required braking force is applied to each tractor brake.

The tractor ECU 16 also transmits the braking control pressure signal along the CAN bus 20 to the trailer ECU 18, and the trailer ECU 18 converts the braking control pressure signal to a braking operating signal using the information stored in its memory about the trailer braking system, and transmits the brake operating signal to each of the modulators 32 mounted on the trailer 14 to ensure that the required braking force is applied to each trailer brake.

When the brakes are thus actuated, any deviation in the actual deceleration of the vehicle from the deceleration expected from the braking performance band for the tractor and trailer indicates a braking incompatibility problem or performance problem which may be due to one of the following factors:

1. the tractor brakes are faulty or maladjusted and are therefore not performing within the allowed performance band,

2. the trailer brakes are faulty or maladjusted and are therefore not performing within the allowed performance band,

3. if present, the compatibility control system may be faulty

4. the tractor/trailer predominance may be set incorrectly, i.e. the tractor ECU 16 may have been programmed to manipulate the braking control pressure signal sent to the trailer 14, for example so that the trailer brakes bear more of the share of the braking force than the should in a properly balanced combination.

In order to implement the invention, for every braking event the trailer ECU 18 is programmed to take the wheel speed signal inputs from the wheel speed sensors to determine the vehicle speed at the beginning of the braking event, $v_s$ and the vehicle speed at the end of the braking event, $v_e$, and to use these and the time duration of the braking application, t, to calculate the average deceleration of the vehicle, $Z_{meas}$, during the braking application in accordance with the following equation:

$$Z_{meas} = \frac{v_s - v_e}{t}$$

The trailer ECU 18 also takes the braking control pressure signal coming in from the tractor at regular intervals during the braking application - in this example every 10 ms, and uses this information to determine the average braking control pressure for the braking event, $p_{ave}$.

The trailer ECU 18 then determines if the braking event fulfils specific pre-determined basic qualifying criteria. In this example, the basic qualifying criteria are as follows:

1. the average braking control pressure must be less than 4.5 bar (which should include most normal braking applications but exclude emergency braking),

2. the change of speed of the vehicle must be greater than 10km/h during the braking event, in order to ensure that the value determined for $Z_{meas}$ is sufficiently accurate,

3. the final vehicle speed must be greater than 5km/h, as it is not necessarily possible to obtain a wheel speed reading at speeds below 5km/h.

It should be appreciated that other qualifying criteria could be used. For example, the maximum braking control pressure could be between 3.5 bar and 5.5 bar, the minimum speed change could be 9 or 11 km/h or the minimum final vehicle speed could be between 4 and 6 km/h.

If the braking event is determined to have met the basic qualifying criteria, the ECU 18 then uses the values of $Z_{meas}$ and $p_{ave}$ to place the event on a graph of Z against $P_m$ as shown in Figure 3, and assigns the braking event to a category depending on where the braking event is located relative to the trailer performance band illustrated in Figure 3. To do this, the graph is divided into a plurality of sub-bands, and the braking event assigned to the sub-band it lies in.

The sub-band in which each qualifying braking event lies is recorded in a histogram stored in the non-volatile memory of the ECU 18. Each sub-band corresponds to a column in the histogram, and the ECU 18 is programmed to provide each column of the histogram, i.e. each sub-band, with a counter which is advanced every time a braking event occurs which is allocated to that sub-band. In this way, only a relatively small amount of memory is required to store this information for a large number of braking events.

The histogram may be downloaded directly to a PC from the memory of the ECU 18, for example when a diagnostic computer is connected to the ECU 18, or via a telematic connection to a remote monitoring station either on demand, or automatically when a predetermined event occurs, e.g. when the vehicle has travelled more than a particular number of miles.

Over time, as more and more qualifying braking applications occur, the histogram will show the distribution of the measured average deceleration, $Z_{meas}$ for these braking applications. For a perfectly-matched combination, the measured average acceleration would, theoretically, correspond exactly to the desired deceleration. In the real world this is not the case, as additional retardation variables will cause a slight deviation from the desired deceleration. The ECU 18 can be programmed to take some such variables into account when determining $Z_{meas}$. For example, the vehicle may be provided with an accelerometer which is configured to measure the acceleration of the vehicle parallel to its longitudinal axis, and the ECU 18 programmed to determine the contribution made by the road gradient to $Z_{meas}$ by comparing the vehicle acceleration determined using the longitudinal accelerometer with the acceleration determined using the wheel speed signals, and to correct $Z_{meas}$ accordingly.

Alternatively or additionally, driveline retarder operation may be allowed for by providing for the transmission of a signal indicating the retarder operation status from the tractor 12 to the trailer ECU 18 via the CAN bus 20, and programming the ECU 18 to either disqualify the braking event from inclusion in the histogram if a signal indicating that the driveline retarder was in operation during the braking event, or, if a signal indicative of the deceleration resulting from application of the driveline retarder is provided, to correct $Z_{meas}$ accordingly.

Other variables, such as air resistance, cannot readily be taken into consideration, and therefore there will always be some deviation in $Z_{meas}$ from the desired deceleration.

In a simple preferred embodiment of the invention, the trailer ECU 18 is programmed to use the wheel speed measurements taken just before the start of the braking event to calculate the vehicle acceleration or deceleration at that point, and to off-set $Z_{meas}$ by that amount when determining in which band the braking event lies.

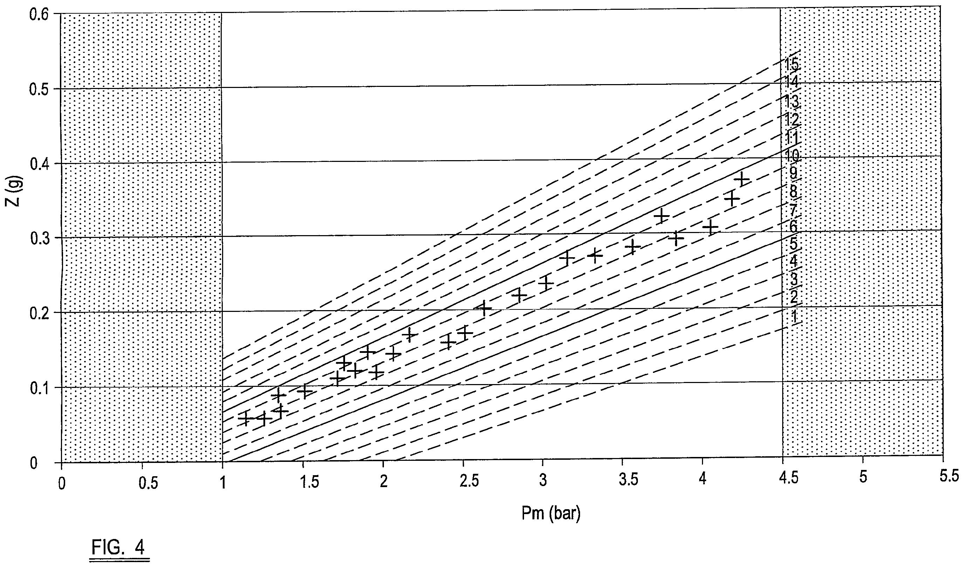

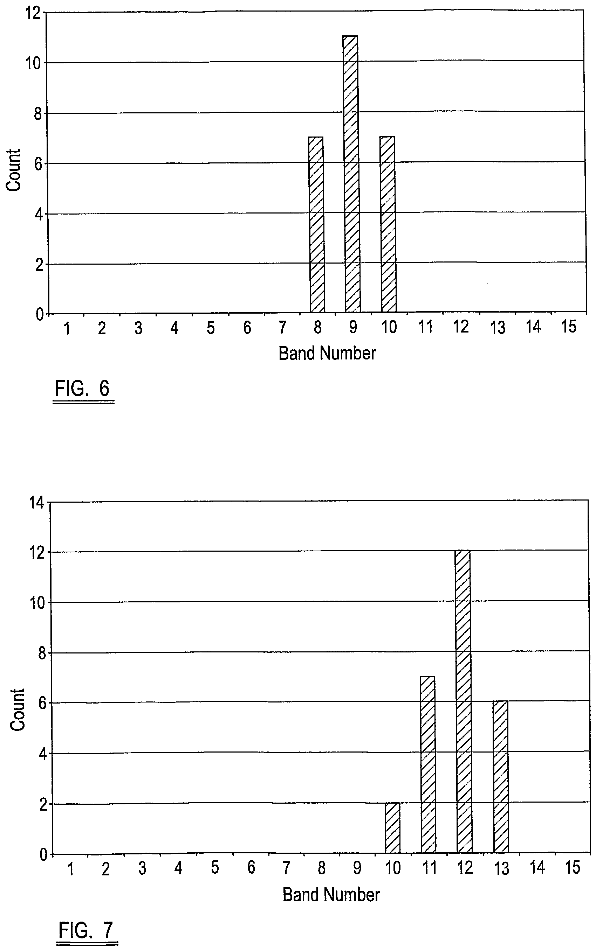

It has been found that for a well-matched combination, the measured average decelerations all lie on or very close to the centre of the trailer performance band, and this shows as a single peak near the centre of the histogram. An example plot of Z against $p_m$ for a well-matched tractor and trailer combination, showing the trailer braking performance band for the trailer 14 in solid line, the sub-bands in dashed line, and the distribution of braking events according to $Z_{meas}$ and $p_{ave}$ as crosses, is illustrated in Figure 4, and the resulting histogram shown in Figure 6. If the braking systems of the tractor 12 and trailer 14 are not well-matched, however, this will not be the case.

If the histogram shows a single peak which is centred significantly below the mid-point of the performance band, i.e. in general, the measured deceleration is lower than the desired deceleration, either the trailer brakes are under-performed, i.e. are producing a lower braking force than intended, or the tractor brakes are not properly matched to the performance of the trailer brakes, and are producing too little braking force.

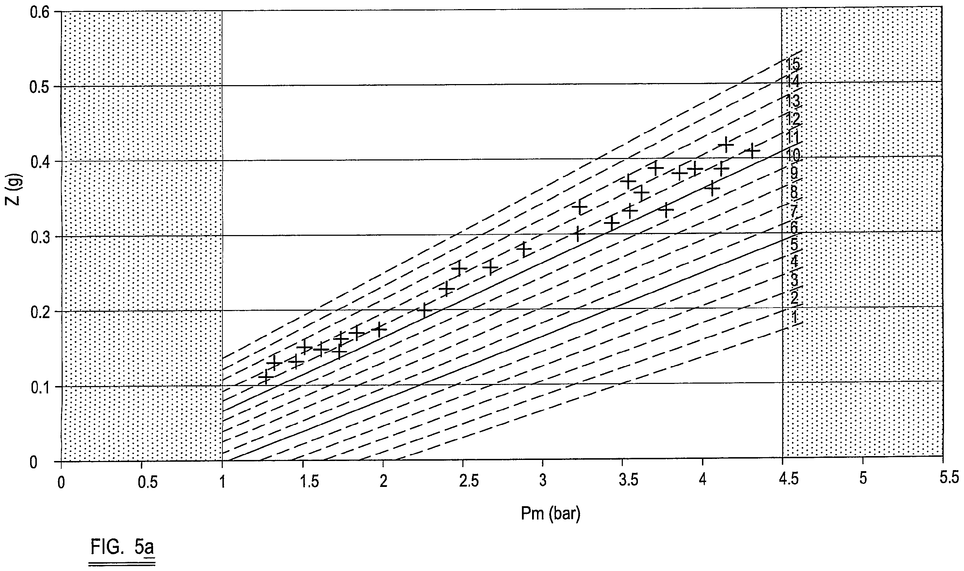

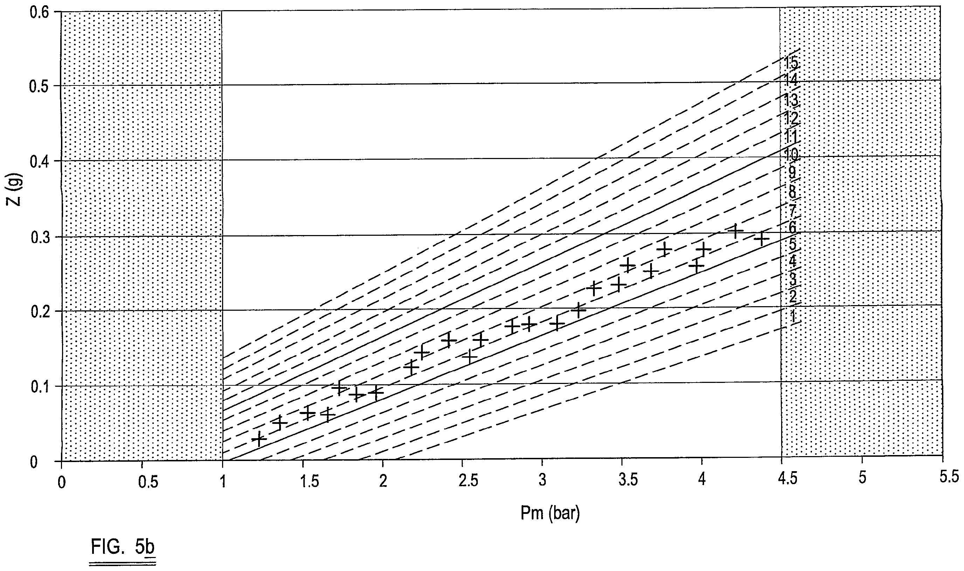

Similarly, if the histogram shows a single peak which is centred significantly above the mid-point of the trailer performance band, i.e. in general, the measured deceleration is higher than the desired deceleration, either the trailer brakes are over-braking, i.e. producing more braking force than intended, or the tractor brakes are not properly matched to the performance of the trailer brakes, and are producing too much braking force. An example plot of Z against $p_m$ for such a tractor and trailer combination, showing the trailer braking performance band for the trailer 14 in solid line, the sub-bands in dashed line, and the distribution of braking events according to $Z_{meas}$ and $p_{ave}$ as crosses, is illustrated in Figure 5, and the resulting histogram shown in Figure 7.

If the histogram shows multiple peaks, however, this indicates that the trailer 14 has been towed by multiple tractors 12 each with different braking characteristics, that there is a variable or perhaps intermittent fault with either the tractor or trailer braking system, or the programming of either the tractor ECU 16 or trailer ECU 18 has been changed.

It will therefore be appreciated that a consideration of the appearance of the histogram enables an operator to make an assessment as to whether there is a problem with the braking systems of either the tractor 12, trailer 14 or an issue with the compatibility of the two. Whilst the consideration of the histogram does not provide an indication of the exact nature of the problem, it does give some guidance as to what the problem might be to assist in future investigation and testing of the vehicle 10.

It is possible that braking performance problems only become apparent when the vehicle is driven on particular routes, or when the trailer 14 is used with a particular type of tractor 12. As such, it can be useful for a separate histogram to be recorded for each trip made by the vehicle. To facilitate easier comparison of a plurality of such histograms, a brake performance value, preferably an integer value, may be assigned to each sub-band, and the data stored in the histogram used to provide a quantitative indication of the position of the peak of the histogram. For example, the median or the mode of the recorded brake performance values can be determined using standard statistical analysis techniques. This enables a user to make a quick comparison of the braking performance of the vehicle 10 under the various different circumstances. For example, taking the histogram shown in Figure 6 for the well-matched combination, the median and mode brake performance value are 9.5.

The invention could be applied to a plurality of vehicles in a fleet, the separate histograms combined, and the modal brake performance value determined for the entire fleet. The results for the individual vehicles can then be compared with the combined results for the entire fleet and any vehicle showing a deviation from the combined results noted so that the performance of this vehicle can be investigated further.

It is also possible to record two or more separate histograms for a vehicle over the same period of time, for example, one for low braking pressure braking applications (for example, 1-2 bar), and the other for high braking pressure braking applications (for example, 2-4.5 bar). This can be particularly useful because, whilst the braking systems might perform well at high braking pressures, at low braking pressures, where the brakes of the vehicle are only just starting to develop braking forces, mismatching of the braking systems is much more likely due to an in-balance in brake thresholds, perhaps because different types of brakes are used on the tractor 12 to the trailer 14, or because of trailer predominance being set on the tractor 12. As such, if a single histogram were prepared for all braking applications, the effects of the low-pressure mismatching might be disguised by the good compatibility at higher braking pressures.

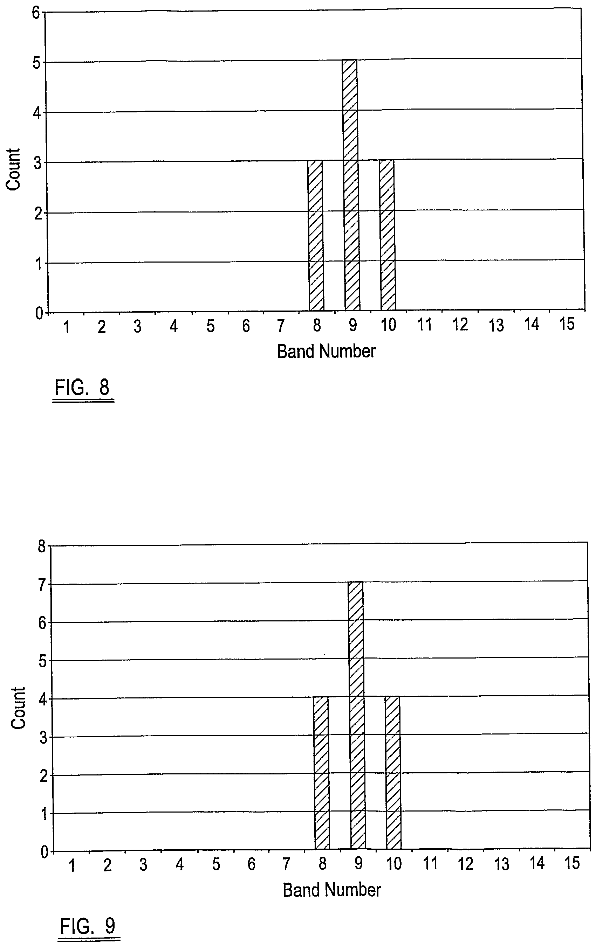

For example, Figure 8 shows the histogram for the braking events with $p_{ave}$ of between 1 and 2 bar, whilst Figure 9 shows the histogram for the braking events with $p_{ave}$ of between 2 and 4.5 bar, both from the plot for the well-matched combination shown in Figure 4.

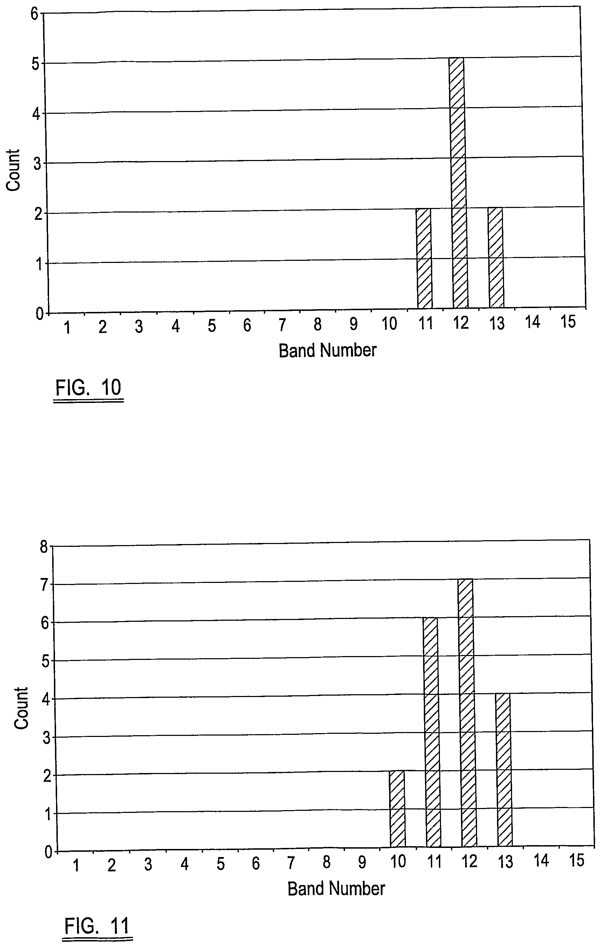

Similarly, Figure 10 shows the histogram for the braking events with $p_{ave}$ of between 1 and 2 bar, whilst Figure 11 shows the histogram for the braking events with $p_{ave}$ of between 2 and 4.5 bar, both from the plot for the combination shown in Figure 5. In this case the, difference in the histogram profiles for the low pressures braking events and the high pressure braking events are clearly seen - the low pressure braking events are a tighter grouping around the sub-band number 12, whereas the high pressure braking events are more widely spread. The median braking pressure value for the low pressure braking events is 12.5 whereas the median braking pressure value for the high pressure braking events is 12.2.

In a further embodiment of the invention, the braking events can be further sub-divided by vehicle load, so, for example, four histograms could be prepared - the first for low pressure, low load braking events, the second for high pressure low load braking events, the third for low pressure, high load braking events, and the fourth for high pressure, high load braking events. A high load braking event could, for example, be deemed to be one which occurs when the vehicle is loaded above half its maximum capacity, whilst a low load braking event is deemed to be one which occurs when the vehicle is loaded to less than half its maximum capacity.

It should be appreciated that, whilst in the system described above, both the tractor 12 and trailer 14 have EBS, the invention could equally be applied where either the tractor 12 or trailer 14 have a conventional fully pneumatic or hydraulic braking system, with the ECU 16, 18 providing anti-lock braking control. Where a pneumatic or hydraulic braking system is provided, it will be appreciated that the braking control pressure signal generated in response to the driver's demand for braking constitutes a pneumatic or hydraulic pressure signal.

It should also be appreciated that, whilst in the system described above, the invention is applied to the trailer 14, i.e. it is the trailer ECU 18 which carries out the comparison of the actual vehicle deceleration with the trailer braking performance band, the invention could equally be carried out by the tractor ECU 16 carrying out a comparison of the actual vehicle deceleration with the tractor braking performance band.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

**Claims**

1. A method of providing an indication of the performance of the braking system of a vehicle comprising a tractor and a trailer in which, during a braking event, a braking control pressure signal is generated in response to driver demand for braking, the braking control pressure signal indicating a braking control pressure which is representative of the degree of braking required by the driver, and is transmitted to braking systems provided on the tractor and trailer, the method including the steps of determining an average value of the braking control pressure during the braking event, determining an average value of the vehicle deceleration during the braking event, and using both the average braking control pressure and average vehicle deceleration to assign the braking event to one of a plurality of categories, **charac-**

**terised in that** each of the plurality of categories represents a discrete area on a plot of vehicle deceleration versus braking control pressure.

2. A method according to claim 1 wherein the method is repeated for a plurality of braking events, and a count of the number of braking events falling into each of the plurality of categories maintained and stored in a histogram.

3. A method according to claim 2 wherein each of the categories is assigned a brake performance number, which is used in conjunction with the data stored in the histogram to calculate a value indicative of the performance of the vehicle braking systems.

4. A method according to any preceding claim wherein each braking event is assessed to determine if it meets certain pre-determined qualifying criteria, and the information obtained about the braking event discarded if the braking event does not meet the pre-determined qualifying criteria.

5. A method according to claim 2 wherein the braking control pressures are classified into a plurality of ranges, and each braking event classified according to which of the ranges the average braking control pressure for that event falls, a separate histogram showing the number of braking events falling in each of the plurality of categories being created for each of the plurality of braking control pressure ranges.

6. A method according to claim 2 wherein the braking systems are provided with a means of measuring the load carried by the vehicle, and the vehicle loads are classified into a plurality of ranges, and each braking event classified according to which of the ranges the vehicle load lies during the braking event, a separate histogram showing the number of braking events falling in each of the plurality of categories being created for each of the plurality of vehicle load ranges.

7. A method according to any preceding claim wherein the method further includes the step of determining the vehicle acceleration or deceleration at a point just before commencement of the braking event and using this value to off-set the average deceleration during the braking event.

8. An electronic apparatus for use in the braking system of a vehicle comprising a tractor and a trailer, the electronic braking apparatus being programmed to carry out the method according to any one of the preceding claims.

**Patentansprüche**

1.  Verfahren zur Bereitstellung einer Anzeige der Leistung des Bremssystems eines Fahrzeugs, das eine Zugmaschine und einen Anhänger umfasst, wobei, während eines Bremsereignisses, ein Bremssteuerungsdrucksignal als Reaktion auf den Bremsbedarf eines Fahrers erzeugt wird, wobei das Bremssteuerungsdrucksignal einen Bremssteuerungsdruck anzeigt, der für den vom Fahrer benötigten Bremsgrad repräsentativ ist, und an an der Zugmaschine und am Anhänger bereitgestellte Bremssysteme übertragen wird, wobei das Verfahren die Schritte des Bestimmens eines Durchschnittswerts der Bremssteuerungsdrucks während des Bremsereignisses, des Bestimmens eines Durchschnittswerts der Fahrzeugabbremsung während des Bremsereignisses und der Verwendung sowohl des durchschnittlichen Bremssteuerungsdrucks als auch der durchschnittlichen Fahrzeugabbremsung, um das Bremsereignis einer einer Mehrzahl von Kategorien zuzuordnen, beinhaltet, **dadurch gekennzeichnet, dass** jede der Mehrzahl von Kategorien einen diskreten Bereich auf einer Kurve von Fahrzeugabbremsung über Bremssteuerungsdruck darstellt.

2.  Verfahren nach Anspruch 1, worin das Verfahren bei einer Mehrzahl von Bremsereignissen wiederholt wird und eine Zählung der Anzahl Bremsereignisse, die in jede der Mehrzahl von Kategorien fallen, beibehalten und in einem Histogramm gespeichert wird.

3.  Verfahren nach Anspruch 2, worin jeder der Kategorien eine Bremsleistungszahl zugeordnet wird, die in Verbindung mit den im Histogramm gespeicherten Daten verwendet wird, um einen für die Leistung der Fahrzeugbremssysteme indikativen Wert zu berechnen.

4.  Verfahren nach einem vorhergehenden Anspruch, worin jedes Bremsereignis bewertet wird, um zu bestimmen, ob es gewisse vorbestimmte Qualifikationskriterien erfüllt, und die zum Bremsereignis erhaltenen Informationen verworfen werden, wenn das Bremsereignis nicht die vorbestimmten Qualifikationskriterien erfüllt.

5.  Verfahren nach Anspruch 2, worin die Bremssteuerungsdrücke in eine Mehrzahl von Bereichen eingestuft werden und jedes Bremsereignis je nachdem, in welchen der Bereiche der durchschnittliche Bremssteuerungsdruck für jenes Ereignis fällt, eingestuft wird, wobei ein separates Histogramm die Anzahl Bremsereignisse zeigt, die in jede der Mehrzahl von Kategorien fallen, die für jeden der Mehrzahl von Bremssteuerungsdruckbereichen erstellt werden.

6.  Verfahren nach Anspruch 2, worin die Bremssysteme mit einem Mittel zur Messung der vom Fahrzeug beförderten Last versehen sind und die Fahrzeuglasten in eine Mehrzahl von Bereichen eingestuft werden und jedes Bremsereignis je nachdem, in welchem der Bereiche die Fahrzeuglast während des Bremsereignisses liegt, eingestuft wird, wobei ein separates Histogramm die Anzahl Bremsereignisse zeigt, die in jede der Mehrzahl von Kategorien fallen, die für jeden der Mehrzahl von Fahrzeuglastbereichen erstellt werden.

7.  Verfahren nach einem vorhergehenden Anspruch, worin das Verfahren ferner den Schritt des Bestimmens der Fahrzeugbeschleunigung oder -abbremsung an einem Punkt kurz vor Beginn des Bremsereignisses und der Verwendung dieses Werts zum Ausgleichen der durchschnittlichen Abbremsung während des Bremsereignisses beinhaltet.

8.  Elektronische Vorrichtung zur Verwendung im Bremssystem eines Fahrzeugs, das eine Zugmaschine und einen Anhänger umfasst, wobei die elektronische Bremsvorrichtung dafür programmiert ist, das Verfahren nach einem der vorhergehenden Ansprüche auszuführen.

**Revendications**

1.  Procédé de fourniture d'une indication de la performance du système de freinage d'un véhicule comprenant un véhicule tracteur et une remorque dans lequel, pendant un événement de freinage, un signal de pression de contrôle de freinage est généré en réponse à une demande de freinage par le conducteur, le signal de pression de contrôle de freinage indiquant une pression de contrôle de freinage représentative du degré de freinage requis par le conducteur, et est transmis aux systèmes de freinage situés sur le véhicule tracteur et la remorque, le procédé comprenant les étapes consistant à déterminer une valeur moyenne de la pression de contrôle de freinage pendant l'événement de freinage, déterminer une valeur moyenne de la décélération du véhicule pendant l'événement de freinage, et utiliser la pression de contrôle de freinage moyenne ainsi que la décélération moyenne du véhicule pour affecter l'événement de freinage à une catégorie d'une pluralité de catégories, le procédé étant **caractérisé en ce que** chaque catégorie de la pluralité de catégories représente une zone distincte sur un tracé d'une décélération de véhicule en fonction d'une pression de contrôle de freinage.

2.  Procédé selon la revendication 1, le procédé étant répété pour une pluralité d'événements de freinage, et un décompte du nombre d'événements tombant dans chaque catégorie de la pluralité de catégories étant conservé et stocké dans un histogramme.

3. Procédé selon la revendication 2, dans lequel chacune des catégories se voit attribuer un numéro de performance de freinage, utilisé conjointement avec les données stockées dans l'histogramme pour calculer une valeur révélatrice de la performance des systèmes de freinage de véhicule.

4. Procédé selon l'une quelconque des revendications précédentes, dans lequel chaque événement de freinage est évalué pour déterminer s'il satisfait à certains critères d'admissibilité prédéterminés, et l'information obtenue sur l'événement de freinage est rejetée si l'événement de freinage ne satisfait pas aux critères d'admissibilité prédéterminés.

5. Procédé selon la revendication 2, dans lequel les pressions de contrôle de freinage sont classées en une pluralité d'intervalles, et chaque événement de freinage est classé selon l'intervalle dans lequel tombe la pression de contrôle de freinage moyenne pour cet événement, un histogramme distinct montrant le nombre d'événements de freinage tombant dans chaque catégorie de la pluralité de catégories étant créé pour chaque intervalle de la pluralité d'intervalles de pressions de contrôle de freinage.

6. Procédé selon la revendication 2, dans lequel les systèmes de freinage sont munis d'un moyen de mesure de la charge transportée par le véhicule, et les charges de véhicule sont classées en une pluralité d'intervalles, et chaque événement de freinage est classé selon l'intervalle dans lequel tombe la charge de véhicule pendant l'événement de freinage, un histogramme distinct montrant le nombre d'événements de freinage tombant dans chaque catégorie de la pluralité de catégories étant créé pour chaque intervalle de la pluralité d'intervalles de charges de véhicule.

7. Procédé selon l'une quelconque des revendications précédentes, le procédé comprenant en outre l'étape consistant à déterminer l'accélération ou la décélération du véhicule à un point précédant immédiatement le début de l'événement de freinage, et utiliser cette valeur pour décaler la décélération moyenne pendant l'événement de freinage.

8. Appareil électronique destiné à être utilisé dans le système de freinage d'un véhicule comprenant un véhicule tracteur et une remorque, l'appareil électronique étant programmé pour réaliser le procédé selon l'une quelconque des revendications précédentes.

FIG. 1

FIG. 2

FIG. 3

FIG. 4

FIG. 5a

FIG. 5b

FIG. 6

FIG. 7

FIG. 8

FIG. 9

FIG. 10

FIG. 11

**EP 2 326 540 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3901270 A
- EP 0697314 A
- EP 1800982 A
- US 5892437 A

19